# EUROPÄISCHE PATENTSCHRIFT

(11) **EP 4 359 280 B1**
(45) Veröffentlichungstag und Bekanntmachung des Hinweises auf die Patenterteilung: **14.01.2026**
(21) Anmeldenummer: 22735176.4
(22) Anmeldetag: 24.06.2022
(51) Int. Cl.: B61B 12/00, B61B 12/04, B61B 12/06

(54) **SEILBAHNFAHRZEUG**
CABLEWAY VEHICLE
VÉHICULE DE TÉLÉCABINE

(30) Priorität: 25.06.2021 AT 505242021
(43) Veröffentlichungstag der Anmeldung: 01.05.2024
(73) Patentinhaber: Innova Patent GmbH, 6922 Wolfurt (AT)
(72) Erfinder: FISCHNALLER, Dieter, 6714 Nüziders (AT); WOLF, Markus, 6653 Bach (AT); SUTTER, Josef, 6900 Bregenz (AT)
(74) Vertreter: Patentanwälte Pinter & Weiss OG
(86) Internationale Anmeldenummer: PCT/EP2022/067385
(87) Internationale Veröffentlichungsnummer: WO 2022/269054

(56) Entgegenhaltungen:
- EP-A1- 0 222 646
- EP-A1- 3 795 442
- CH-A5- 679 569
- FR-A1- 2 446 753
- KR-A- 20120 059 496
- US-A- 5 178 413
- US-A1- 2009 031 743
- US-A1- 2010 089 281

## Beschreibung

Die Erfindung betrifft ein Seilbahnfahrzeug für eine Seilbahn, das mittels eines Förderseils in einer durch das Förderseil vorgegebenen Bewegungsrichtung bewegbar ist, wobei das Seilbahnfahrzeug ein Gehänge zur hängenden Befestigung des Seilbahnfahrzeugs am Förderseil aufweist. Weiters betrifft die Erfindung eine Seilbahn mit einer Anzahl von Seilbahnfahrzeugen, die mittels eines Förderseils zwischen zumindest zwei Seilbahnstationen bewegbar sind, wobei das Seilbahnfahrzeug einen Beförderungskörper zur Aufnahme von Personen aufweist, der mit dem Gehänge verbunden ist, wobei der Beförderungskörper einen Sessel mit einer Wetterschutzhaube zur Überdachung des Sessels aufweist, wobei die Wetterschutzhaube zwischen einer Offenstellung und einer Schließstellung verlagerbar ist.

Luftseilbahnen, nachfolgend der Einfachheit halber Seilbahnen genannt, gibt es in verschiedensten Ausführungsformen, meist zum Personen- und/oder Gütertransport, beispielsweise als städtisches Verkehrsmittel oder für den Personentransport in Skigebieten. Dabei werden Seilbahnfahrzeuge wie z.B. Gondeln, Kabinen oder Sessel ohne feste Führungen von einem oder mehreren (Draht-)Seilen getragen und in der Luft hängend bewegt. Die Seilbahnfahrzeuge haben also keinen Bodenkontakt. Solche Seilbahnen werden in der Regel in unwegsamem Gelände verwendet, meist für Bergstrecken, beispielsweise in Skigebieten, um Personen vom Tal auf einen Berg zu befördern, aber auch im urbanen Bereich zur Personenbeförderung. In der Regel weisen Seilbahnen zwei oder mehrere Stationen auf, zwischen denen die Seilbahnfahrzeuge bewegt werden.

Zu unterscheiden sind dabei Umlaufbahnen und Pendelbahnen. Bei Pendelbahnen verkehren ein oder zwei Seilbahnfahrzeuge, gezogen von einem Zugseil, auf einem Förderseil oder auf Schienen auf einer Fahrspur zwischen zwei Stationen pendelnd hin und zurück. Die Umlaufseilbahn hingegen hat zwischen den Stationen ein endloses, ständig umlaufendes Förderseil, an dem eine Vielzahl von Seilbahnfahrzeuge wie Gondeln oder Sessel hängend angeordnet sind. Die Seilbahnfahrzeuge werden dadurch auf einer Seite von einer Station zur anderen und auf der Gegenseite wieder zurückbewegt. Die Bewegung der Seilbahnfahrzeuge erfolgt daher immer im Wesentlichen kontinuierlich in eine Richtung, analog eines Stetigförderers.

Um auch größere Distanzen überbrücken zu können, sind zwischen den beiden Stationen in der Regel eine oder mehrere Seilbahnstützen zur Führung des/der (Trag-/Zug-)Seile angeordnet. Seilbahnstützen können als Stahlfachwerkkonstruktion, aber auch als Stahlrohr- oder Blechkastenkonstruktion ausgeführt sein. An einer Seilbahnstütze sind meist mehrere Rollen angeordnet, beispielsweise in Form einer sogenannten Rollenbatterie, um das Seil oder die Seile zu tragen und zu führen. Bei Umlaufbahnen sind die Seilbahnfahrzeuge in der Regel in einem definierten Abstand voneinander am Förderseil befestigt. Um eine möglichst gleichmäßige Belastung des Förderseils und auch der Seilbahnstützen zu gewährleisten, sind die Abstände zwischen der Vielzahl von Seilbahnwagen an einer Seilbahn meist gleich groß. Der Abstand zwischen den Seilbahnfahrzeugen kann natürlich je nach konkreter Ausgestaltung einer Seilbahn variieren. Beispielsweise wird der Abstand zwischen den Sesseln einer Sesselbahn wegen der geringeren Belastung geringer sein, als der Abstand zwischen den Gondeln einer Gondelbahn usw.

Bei modernen Umlaufbahnen sind die Seilbahnfahrzeuge in der Regel nicht fest mit dem Förderseil verbunden, sondern mittels öffenbaren Seilklemmen. Dadurch können die Seilbahnfahrzeuge in den Stationen vom Förderseil abgekoppelt werden und mit einer relativ zur Geschwindigkeit des Förderseils geringeren Geschwindigkeit durch die Station bewegt werden. Insbesondere bei der Personenbeförderung werden dadurch der Komfort und die Sicherheit für die Passagiere erhöht, weil mehr Zeit für das Aus- und Einsteigen zur Verfügung steht. Bei der Ausfahrt aus der Station werden die Seilbahnfahrzeuge dann wieder mittels der Seilklemmen am Förderseil festgeklemmt.

Vorzugsweise werden die Seilbahnfahrzeuge dabei wieder auf die Geschwindigkeit des umlaufenden Förderseils beschleunigt, um ein abruptes Beschleunigen und stoßartige Belastungen zu vermeiden. Aufgrund der Entwicklung zu größerer Beförderungskapazität und kürzeren Transportzeiten hat sich neben der Größe bzw. Kapazität der Seilbahnfahrzeuge natürlich auch die Beförderungsgeschwindigkeit des Förderseils in den letzten Jahren erhöht. Der Umstand des Abkoppelns der Seilbahnwagen in den Stationen und die immer höheren Beförderungsgeschwindigkeiten sind natürlich ebenfalls bei der Festlegung des Abstands zwischen den einzelnen Seilbahnfahrzeuge zu berücksichtigen. Daneben gibt es noch Seilbahnen mit fix am Förderseil geklemmten Seilbahnfahrzeuge.

Im Betrieb einer Seilbahn kann es aufgrund verschiedener Einflussgrößen zu unerwünschten transversalen Schwingungen des Förderseils kommen, insbesondere in vertikaler Richtung. Solche Schwingungen beeinflussen nicht nur den Fahrkomfort der Passagiere negativ, sondern können sich auch negativ auf die Verfügbarkeit der Seilbahnanlage und die Lebensdauer einzelner Komponenten auswirken. Schlimmstenfalls können Seilschwingungen beispielsweise zum Herausspringen des Förderseils aus einer Führungsrolle einer Seilbahnstütze führen. Betriebsbedingte Einflussgrößen solcher Seilschwingungen sind beispielsweise die Anzahl und das Gewicht der mit dem Förderseil gekoppelten Seilbahnfahrzeuge, die Beladung der Seilbahnfahrzeuge, der Abstand zwischen den Seilbahnfahrzeugen, die Länge der Seilfelder zwischen zwei Seilbahnstützen, die zyklische Be- und Entlastung durch das Koppeln bzw. Entkoppeln der Seilbahnfahrzeuge mit dem bzw. vom Förderseil sowie in das Förderseil eingeprägte Antriebskräfte usw.

Diese betriebsbedingten Einflussgrößen führen zu zeitlich veränderlichen Seilkräften im Förderseil, die zu einer Schwingungsanregung führen kann. Manche der betriebsbedingten Einflussgrößen (z.B. die Länge der Seilfelder, Anzahl und Gewicht der Seilbahnfahrzeuge) können beispielsweise bei der Auslegung einer Seilbahn berücksichtigt werden, sind allerdings während des Betriebs der Seilbahn im Wesentlichen nicht oder nur mit großem Aufwand veränderlich. Andere betriebsbedingte Einflussgrößen wiederum können während des Betriebs der Seilbahn beeinflusst werden, z.B. die Beladung der Seilbahnfahrzeuge oder die in das Förderseil eingeprägten Antriebskräfte, z.B. zum Beschleunigen des Förderseils aus dem Stillstand.

Daneben gibt auch äußere witterungsbedingte Einflussgrößen auf die Seilschwingungen, die nicht veränderbar und auch nicht oder nur schwer vorhersehbar sind. Bei entsprechenden Windverhältnissen wirken bedingt durch die äußere Formgebung der Seilbahnfahrzeuge aerodynamische Windkräfte auf die Seilbahnfahrzeuge. Diese Windkräfte können in Wechselwirkung mit den betriebsbedingt vorhandenen Seilschwingungen stehen und in bestimmten Fällen Eigenschwingungsformen der Seildynamik in vertikaler Richtung anregen sowie auch ein Querpendeln der Seilbahnfahrzeuge quer zur Bewegungsrichtung. In seltenen Fällen, speziell bei flachen Seilfeldern mit schweren Seilbahnfahrzeugen und bei entsprechender topologischer Beschaffenheit der Seilführung, können bei einem bestimmten Vektorfeld des Windes, zeitlich veränderliche aerodynamische Effekte entstehen, welche Selbsterregungsphänomene der Seilschwingung hervorrufen können (z.B. transversale Seilschwingung im 2.Mode oder querpendelnde Fahrzeuge).

Diese Selbsterregungsphänomene sind im Wesentlichen auf zustandsabhängige Strömungsbeiwerte der Fahrzeugumströmung zurückzuführen, beispielsweise einen veränderlichen Auftriebsbeiwert (ca-Wert), einen veränderlichen Strömungswiderstandsbeiwert (cw-Wert) oder einen veränderlichen Drehmomentbeiwert (cm-Wert). Diese zustandsabhängigen Strömungsbeiwerte können zu einer schwingungsanregenden Seilkraftänderung im Förderseil in Abhängigkeit der Aerodynamik führen. Zur Vermeidung kritischer Eigenschwingungen des Förderseils wurde im Stand der Technik bisher versucht, die oben genannten betriebsbedingten Einflussgrößen anzupassen, beispielsweise durch die Wahl einer bestimmten Länge von Seilfeldern, die Wahl einer bestimmten Anzahl von Seilbahnfahrzeugen oder den Abstand zwischen Seilbahnfahrzeugen. Aufgrund der sich rasch ändernden und nur schwer vorhersehbaren Witterungsbedingungen führte die Schwingungsvermeidung durch die konstruktive Auslegung der Seilbahn aber nicht immer zu zufriedenstellenden Ergebnissen.

WO 2006/077474 A1 offenbart einen Sessel für eine Sesselbahn, an dessen Unterseite eine Leiteinrichtung angeordnet ist, die dazu dient, um Luftwirbeln höchstmöglich zu vermeiden.

Dadurch soll ein möglichst stabiler Lauf der Sessel ermöglicht werden. US 2010/089281 A1 offenbart ein herkömmliches Seilbahnfahrzeug mit einem Sessel und einer Wetterschutzhaube.

Daneben sind Einrichtungen bekannt, die darauf abzielen, seitliche Pendelbewegungen der Seilbahnfahrzeuge zu reduzieren. FR 2739604 A1 offenbart z.B. eine Seilbahnkabine mit einem aerodynamischen Leitelement, das dazu dient, seitliche Pendelbewegungen zu kompensieren, die durch Seitenwind entstehen. Ähnlich wie FR 2739604 A1 offenbart FR 2736607 A1 eine Seilbahnkabine, an der mehrere aerodynamische Leitelemente angeordnet sind, die dem Seitenwind entgegengerichtet sind. Die Leitelemente dienen dazu, um den turbulenz-bedingten Luftwiderstand zu reduzieren und die vertikale Kraft zu erhöhen. SU 804539 A1 offenbart eine Seilbahnkabine, auf deren Dach ein Flügel mit einer Stabilisierungsfinne angeordnet ist. Der Flügel dient ähnlich wie bei FR 2739604 A1 und FR 2736607 A1 dazu, bei seitlichem Wind die vertikale Kraft zu erhöhen (quasi als virtuelle Masse) und damit die Kabine gegen seitliche Schwingungen zu stabilisieren. Die Leiteinrichtungen sind jedoch ungeeignet, um vertikale Schwingungen zu reduzieren.

Es ist daher eine Aufgabe der Erfindung, im Betrieb einer Seilbahn kritische Schwingungszustände von Seilbahnfahrzeugen und folglich des Förderseils, insbesondere in vertikaler Richtung, zu vermeiden, um die Sicherheit des Betriebs der Seilbahn zu erhöhen.

Die Aufgabe wird mit einem eingangs genannten Seilbahnfahrzeug dadurch gelöst, dass an der Wetterschutzhaube des Seilbahnfahrzeugs eine Luftverwirbelungseinrichtung vorgesehen ist, die sich quer zur Bewegungsrichtung zumindest über einen Teil des Seilbahnfahrzeugs erstreckt und die dazu ausgebildet ist, während der Bewegung des Seilbahnfahrzeugs einen definierten Strömungsabriss einer das Seilbahnfahrzeug in Bewegungsrichtung umströmenden Luftströmung zu erzeugen, wobei sich die Luftverwirbelungseinrichtung quer zur Bewegungsrichtung zumindest über einen Teil einer Breite des Seilbahnfahrzeugs erstreckt. Unter einem definierten Strömungsabriss ist im Rahmen der Erfindung im Wesentlichen ein örtlich konstanter und vorzugsweise hochfrequenter Strömungsabriss der Luftströmung am Seilbahnfahrzeug unabhängig vom Vektorfeld des Windes zu verstehen, der auf das Seilbahnfahrzeug wirkt. Durch die Luftverwirbelungseinrichtung kann das Ablöseverhalten einer Grenzschichtströmung am Seilbahnfahrzeug stabilisiert werden, wodurch eine zeitliche Veränderung der auf das Seilbahnfahrzeug wirkenden aerodynamischen Kräfte und Momente reduziert werden kann. Dies führt in weiterer Folge zu einer nahezu zeitkonstanten Druckverteilung und Scherspannungsverteilung an der Oberfläche des Seilbahnfahrzeugs. Unter einer Luftverwirbelungseinrichtung sind im Rahmen der Erfindung beispielsweise geeignete Spoiler, Turbulatoren und andere strukturelle Elemente zu verstehen, die während der Umströmung des Seilbahnfahrzeugs durch eine Luftströmung zu einem definierten Strömungsabriss und folglich zu einer möglichst zeitkonstanten Druckverteilung und Scherspannungsverteilung an der Oberfläche des Seilbahnfahrzeugs führen. Die Luftverwirbelungseinrichtung dient somit nicht dazu, die Strömung gezielt zu leiten, wie dies im oben genannten Stand der Technik der Fall ist, sondern erzeugt einen Strömungsabriss. Die Luftverwirbelungseinrichtung hat somit genau den gegenteiligen Effekt.

Um den Effekt zu vergrößern erstreckt sich die Luftverwirbelungseinrichtung vorzugsweise über zumindest 30% einer Breite des Seilbahnfahrzeugs, vorzugsweise zumindest 50%, besonders bevorzugt zumindest 70%. Ebenfalls kann es vorteilhaft sein, wenn eine Breite der Luftverwirbelungseinrichtung quer zur Bewegungsrichtung des Seilbahnfahrzeugs mindestens doppelt so groß ist, wie eine Länge der Luftverwirbelungseinrichtung in Bewegungsrichtung, vorzugsweise mindestens fünfmal, besonders bevorzugt mindestens zehnmal so groß.

Gemäß einer vorteilhaften Ausgestaltung ist vorgesehen, dass ein Teil der Luftverwirbelungseinrichtung in einem oberen Bereich des Seilbahnfahrzeugs oberhalb des Beförderungskörpers angeordnet ist und/oder dass ein Teil der Luftverwirbelungseinrichtung in einem unteren Bereich des Seilbahnfahrzeugs unterhalb des Beförderungskörpers angeordnet ist und/oder dass ein Teil der Luftverwirbelungseinrichtung in einem seitlichen Bereich des Seilbahnfahrzeugs seitlich am Beförderungskörper angeordnet ist. Dabei ist es vorteilhaft, wenn sich der seitlich am Seilbahnfahrzeug vorgesehene Teil der Luftverwirbelungseinrichtung zumindest über einen Teil einer Höhe des Seilbahnfahrzeugs erstreckt, vorzugsweise über zumindest 30% einer Höhe des Beförderungskörpers, besonders bevorzugt über zumindest 50%. Ebenfalls vorteilhaft ist es, wenn eine Höhe des seitlich am Seilbahnfahrzeug vorgesehenen Teils der Luftverwirbelungseinrichtung in vertikaler Richtung mindestens doppelt so groß ist, wie seine Länge in Bewegungsrichtung.

Die Luftverwirbelungseinrichtung kann beispielsweise in Bewegungsrichtung und/oder quer zur Bewegungsrichtung und/oder in vertikaler Richtung mehrere hintereinander angeordnete Vorsprünge und/oder mehrere hintereinander angeordnete Vertiefungen aufweisen, wobei die Vorsprünge vorzugsweise eine Höhe von zumindest 5mm, besonders bevorzugt zumindest 10mm, insbesondere zumindest 30mm aufweisen und/oder die Vertiefungen vorzugsweise eine Tiefe von zumindest 5mm, besonders bevorzugt zumindest 10mm, insbesondere zumindest 30mm aufweisen.

Gemäß einer bevorzugten Ausführungsform weist die Luftverwirbelungseinrichtung zumindest ein Luftverwirbelungselement auf, das mit einem Befestigungsmittel am Seilbahnfahrzeug, insbesondere am Beförderungskörper befestigt ist. Dadurch kann das Luftverwirbelungselement einfach ausgetauscht werden oder es kann beispielsweise ein bestehendes Seilbahnfahrzeug in einfacher Weise mit einer Luftverwirbelungseinrichtung nachgerüstet werden. Dabei kann es vorteilhaft sein, wenn die Luftverwirbelungseinrichtung zumindest zwei Luftverwirbelungselemente aufweist, die in Bewegungsrichtung und/oder quer zur Bewegungsrichtung und/oder in vertikaler Richtung voneinander beabstandet am Seilbahnfahrzeug, insbesondere am Beförderungskörper, angeordnet sind. Dadurch kann z.B. bei relativ langen Luftverwirbelungselementen die Montage erleichtert werden und die Luftverwirbelungseinrichtung kann besser an die Kontur eines Seilbahnfahrzeugs angepasst werden.

Um den gewünschten Effekt der Luftverwirbelungseinrichtung zu verbessern kann es vorteilhaft sein, wenn zumindest ein Luftverwirbelungselement in Bewegungsrichtung zumindest teilweise luftdurchlässig ist und/oder dass zumindest ein Abschnitt zumindest eines Luftverwirbelungselements flexibel ist. Gemäß einer vorteilhaften Ausführung kann zumindest ein Luftverwirbelungselement ein bürstenartiges Element, ein Netz, ein Lochblech, ein Gitter oder eine Gummilippe aufweisen.

In einer nicht erfindungsgemäßen Ausgestaltung ist der Beförderungskörper als Kabine ausgebildet und ein Teil der Luftverwirbelungseinrichtung kann beispielsweise am Dach der Kabine und/oder an einer Seitenwand der Kabine und/oder am Boden der Kabine angeordnet sein.

Die Luftverwirbelungseinrichtung ist in der Schließstellung der Wetterschutzhaube vorzugsweise an der Außenseite und/oder an der Innenseite der Wetterschutzhaube angeordnet. Um den Effekt der Luftverwirbelungseinrichtung in der Schließstellung nutzen zu können, ist es vorteilhaft, wenn die Luftverwirbelungseinrichtung in der Schließstellung der Wetterschutzhaube in vertikaler Richtung gesehen im Bereich des höchsten Punktes an der Außenseite der Wetterschutzhaube angeordnet ist. Wenn die Wetterschutzhaube eine gewölbte Außenfläche aufweist, dann ist es beispielsweise vorteilhaft, wenn die Luftverwirbelungseinrichtung im Bereich eines Scheitelpunktes der gewölbten Außenfläche vorgesehen ist.

Um den Effekt der Luftverwirbelungseinrichtung zusätzlich oder alternativ in der Offenstellung der Wetterschutzhaube nutzen zu können, ist es vorteilhaft, wenn die Luftverwirbelungseinrichtung in der Offenstellung der Wetterschutzhaube in vertikaler Richtung gesehen im Bereich des höchsten Punktes der Wetterschutzhaube vorgesehen ist, insbesondere im Bereich einer die Wetterschutzhaube begrenzenden Vorderkante der Wetterschutzhaube. Alternativ oder zusätzlich kann die Wetterschutzhaube eine gewölbte Innenfläche aufweisen und die Luftverwirbelungseinrichtung kann in der Offenstellung der Wetterschutzhaube in Bewegungsrichtung gesehen zwischen der Vorderkante der Wetterschutzhaube und einem Scheitelpunkt der gewölbten Innenfläche der Wetterschutzhaube an der Innenfläche der Wetterschutzhaube angeordnet sein.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 eine schematische Darstellung einer Seilbahn,
Fig.2a ein Seilbahnfahrzeug mit einem Sessel mit einer Wetterschutzhaube in einer Schließstellung,
Fig.2b ein Seilbahnfahrzeug mit einem Sessel mit einer Wetterschutzhaube in einer Offenstellung,
Fig.3 ein nicht erfindungsgemäßes Seilbahnfahrzeug mit einer Kabine.

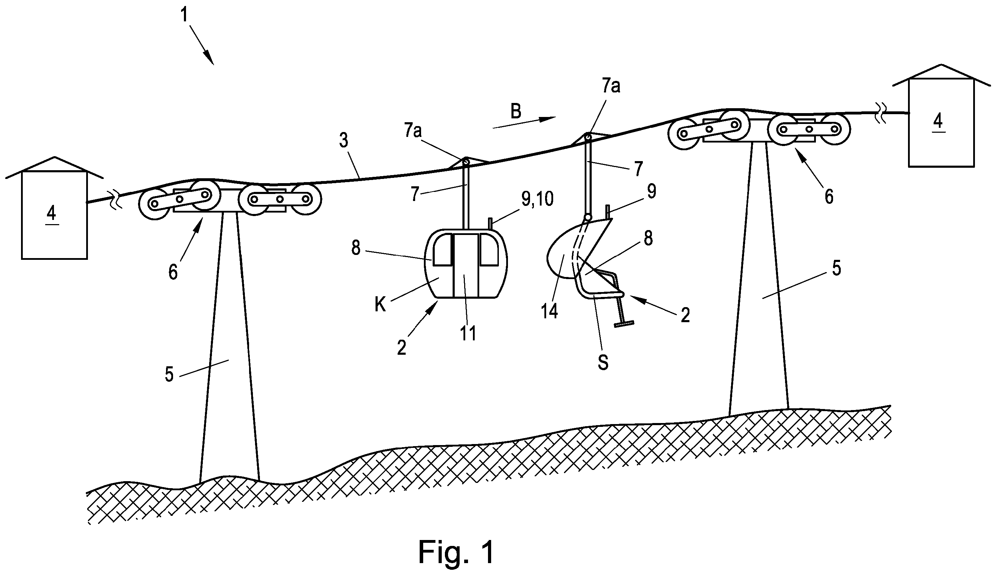

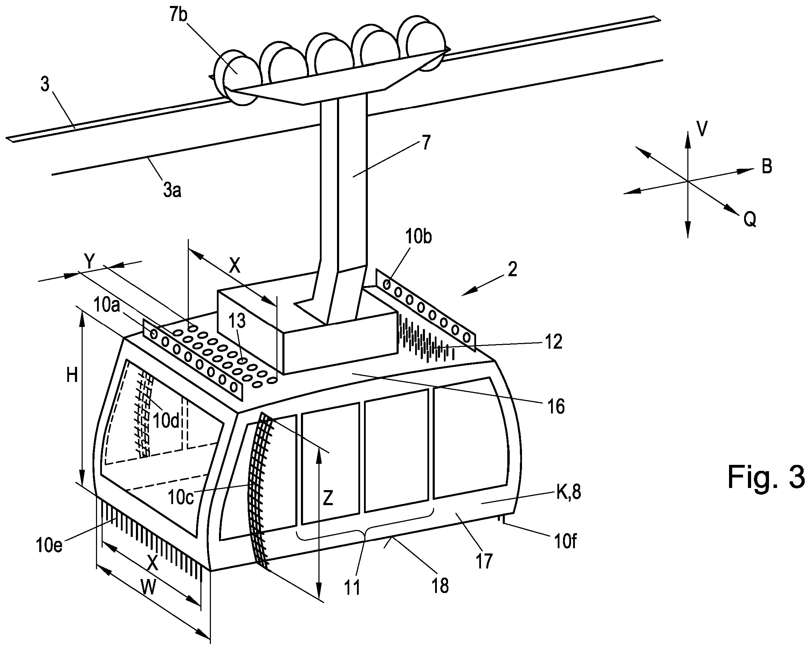

Fig.1 ist eine Seilbahn 1 mit zwei Seilbahnfahrzeugen 2, die mittels eines Förderseils 3 zwischen zwei Seilbahnstationen 4 bewegbar sind, dargestellt, wobei die Seilbahnstationen 4 lediglich schematisch angedeutet sind. Die Seilbahn 1 kann beispielsweise als bekannte Umlaufseilbahn oder als bekannte Pendelbahn ausgebildet sein. Die Seilbahn 1 weist in der Regel eine Mehrzahl von Seilbahnstützen 5 auf, an welchen das Förderseil 3 beispielsweise über bekannte Rollenbatterien 6 geführt ist. Die Anzahl der Seilbahnstützen 5 richtet sich beispielsweise nach der Distanz zwischen den Endstationen 4 der Seilbahn und nach der zu erwartenden Belastung durch die Seilbahnwagen 2, aber auch nach der Topologie des Geländes in dem die Seilbahn 1 betrieben wird. Die Seilbahnstützen 5 dienen dazu, das Förderseil 3 zu tragen und zu führen. Der Einfachheit halber sind in Fig.1 nur zwei Seilbahnstützen 5 dargestellt. Das Förderseil 3 bildet damit eine Bewegungsrichtung B aus, in der die Seilbahnfahrzeuge 2 bewegbar sind. Bei manchen Ausführungen können auch mehrere parallele Förderseile 3 und ggf. ein umlaufendes oder hin und her laufendes Zugseil 3a (Fig.3) vorgesehen sein. Die Erfindung wird im folgenden Beispiel allerdings anhand nur eines Förderseils 3 erläutert, natürlich ist die Erfindung aber auch auf Seilbahnen mit mehreren Förderseilen 3 und/oder Zugseilen anwendbar. Der Aufbau und die Funktion solcher Seilbahnen 1 sind hinlänglich bekannt, weshalb an dieser Stelle nicht näher darauf eingegangen wird.

Die Seilbahnfahrzeuge 2 weisen jeweils ein Gehänge 7 auf, mit dem sie am Förderseil 3 hängend befestigt werden können. Die Seilbahnfahrzeuge 2 können z.B. mittels geeigneter Seilklemmen 7a beispielsweise fest oder lösbar mit dem Förderseil 3 gekoppelt werden. Die Seilbahnwagen 2 sind in der Regel in einem festgelegten Abstand voneinander beabstandet am Förderseil 3 befestigt, wobei der Abstand im Wesentlichen von der konkreten Ausgestaltung der Seilbahn 1 abhängt. Bei Pendelbahnen ist je Richtung üblicherweise nur ein Seilbahnfahrzeug 2 mit relativ großer Transportkapazität angeordnet. Bei Umlaufbahnen ist hingegen eine Vielzahl von Seilbahnfahrzeugen 2 am Förderseil 3 angeordnet. Bei Umlaufbahnen können die Seilbahnfahrzeuge 2 in den Seilbahnstationen 4 oftmals vom Förderseil 3 entkoppelt werden und innerhalb der Seilbahnstation 4 mit verringerter Geschwindigkeit bewegt werden, um einen leichteren Ein- und Ausstieg zu ermöglichen.

Wenn die Seilbahnfahrzeuge 2 für den Personentransport vorgesehen sind, dann weisen die Seilbahnfahrzeuge 2 üblicherweise einen Beförderungskörper 8 zur Aufnahme einer oder mehrerer Personen auf. Der Beförderungskörper 8 kann beispielsweise eine geschlossene Kabine K aufweisen, die zum Ein- und Ausstieg z.B. über zumindest eine Tür 11 zugänglich sein kann. Ein solches Seilbahnfahrzeug 2 mit Kabine K ist in Fig.1 links dargestellt. Der Beförderungskörper 8 kann aber beispielsweise auch einen Sessel S aufweisen, wie anhand des rechten Seilbahnfahrzeugs 2 in Fig.1 dargestellt ist. Zum Schutz vor Witterung kann am Sessel S bekanntermaßen auch eine Wetterschutzhaube 14 vorgesehen sein. Eine Seilbahn 1 kann beispielsweise als reine Kabinenbahn ausgebildet sein, bei der alle Seilbahnfahrzeuge 2 eine Kabine K aufweisen oder kann als reine Sesselbahn ausgebildet sein, bei der alle Seilbahnfahrzeuge 2 einen Sessel S aufweisen. Auch ein Mischbetrieb wäre aber grundsätzlich denkbar, bei dem sowohl Seilbahnfahrzeuge 2 mit Kabine K, als auch Seilbahnfahrzeuge 2 mit Sessel S am Förderseil 3 bewegt werden. Die Seilbahnstationen 4 sind dabei in Abhängigkeit der konkreten Ausgestaltung der Seilbahn 1 ausgebildet. Bei einer Kabinenbahn sind die Türen in der Regel seitlich an der Kabine angeordnet, sodass der Zu- und Ausstieg innerhalb der Seilbahnstationen quer zur Bewegungsrichtung B erfolgt. Bei Sesselbahnen erfolgt der Zustieg hingegen in der Regel in Bewegungsrichtung gesehen von vorne.

Wie eingangs erwähnt, kann es im Betrieb der Seilbahn 1 zu transversalen bzw. insbesondere vertikalen Seilschwingungen des Förderseils 3 kommen, die aus einem Zusammenspiel von betriebsbedingten Einflussgrößen und witterungsbedingten Einflussgrößen, insbesondere des Windes resultieren. Zusätzlich können die witterungsbedingten Einflussgrößen die Seilbahnfahrzeuge 2 auch zu einer Pendelbewegung quer zur Bewegungsrichtung B anregen. Das Förderseil 3 bildet hierbei im Wesentlichen eine Drehachse aus, um die das Seilbahnfahrzeug 2 pendelt. Bis zu einem gewissen Grad sind sowohl Transversalschwingungen des Förderseils 3, als auch Pendelbewegungen der Seilbahnfahrzeuge 2 üblich und treten im Normalbetrieb einer Seilbahn auf. Unter ungünstigen Umständen, insbesondere aufgrund schwer vorhersehbaren zeitlich und örtlich veränderlichen Windrichtung und -geschwindigkeit, können sich die Schwingungen aber auch aufschaukeln, was im Wesentlichen auf die eingangs genannten zeitlich veränderlichen aerodynamischen Strömungseffekte an den Seilbahnfahrzeugen 2 zurückzuführen ist. Wenn eine Anregungsfrequenz des Schwingungssystems im Bereich seiner Eigenfrequenz liegt, kann es schlimmstenfalls zu Resonanzphänomenen und folglich zu sicherheitskritischen Schwingungszuständen kommen, die es im Betrieb der Seilbahn zu vermeiden gilt. Um dies zu vermeiden wurde bisher meist versucht, die Schwingungsanregung über die verfügbaren betriebsbedingten Einflussgrößen zu beeinflussen, beispielsweise durch eine Reduktion der Geschwindigkeit der Seilbahn, insbesondere des Förderseils 3, ggf. bis zum Stillstand der Seilbahn 1.

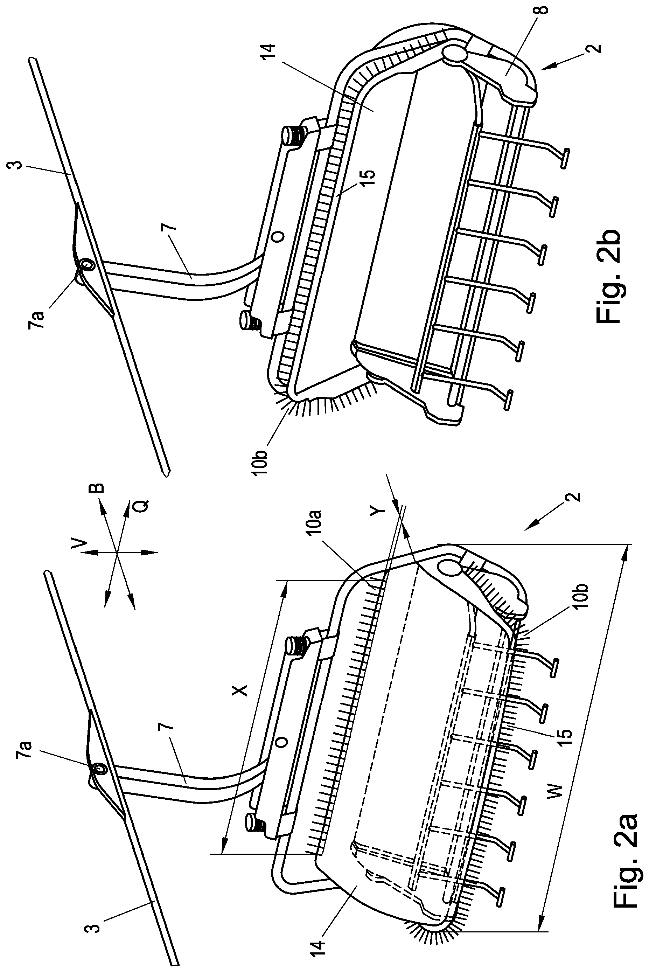

Bei der vorliegenden Erfindung wird hingegen die Anregung des Schwingungssystems durch die witterungsbedingten Einflussgrößen, insbesondere den Wind, reduziert. Dazu ist an zumindest einem Seilbahnfahrzeug 2 eine Luftverwirbelungseinrichtung 9 vorgesehen, die dazu ausgebildet ist, während der Bewegung des Seilbahnfahrzeugs 2 einen definierten Strömungsabriss einer das Seilbahnfahrzeug 2 in Bewegungsrichtung B umströmenden Luftströmung zu erzeugen. Die Luftverwirbelungseinrichtung 9 erstreckt sich dabei quer zur Bewegungsrichtung B (Querrichtung Q - Fig.2a- Fig.3) zumindest über einen Teil einer Breite W des Seilbahnfahrzeugs 9 (Fig.2a-Fig.3). Dadurch kann auch bei zeitlich und örtlich veränderlichen Strömungsbedingungen (insbesondere veränderliche Windrichtung und - geschwindigkeit) gewährleistet werden, dass der Strömungsabriss der Luftströmung im Wesentlichen immer an der gleichen Stelle am Seilbahnfahrzeug 2 erfolgt. Dadurch werden die zeitlich veränderlichen aerodynamischen Strömungseffekte abgeschwächt.

In Fig.1 ist an den Seilbahnfahrzeugen 2 jeweils eine Luftverwirbelungseinrichtung 9 vorgesehen, die sich quer zur Bewegungsrichtung B über einen Teil der Breite W (Fig.2a-Fig.3) des jeweiligen Seilbahnfahrzeugs 2 erstreckt. Unter "quer" ist im Rahmen der Erfindung nicht zwingend orthogonal, also 90°, zur Bewegungsrichtung B zu verstehen, sondern die Luftverwirbelungseinrichtung 9 könnte auch in einem gewissen Winkel zur (orthogonalen) Querrichtung Q des Seilbahnfahrzeugs 2 angeordnet sein. Die Luftverwirbelungseinrichtung 9 kann an einer geeigneten Stelle am Seilbahnfahrzeug 2 angeordnet sein, vorzugsweise am Beförderungskörper 8 (z.B. Kabine K bzw. Sessel S). Die in Fig.1 dargestellte Luftverwirbelungseinrichtung 9 weist beispielsweise ein Luftverwirbelungselement 10 auf, das mit einem geeigneten Befestigungsmittel an einer Außenfläche am Beförderungskörper 8 befestigt ist.

Je nach konstruktiver Ausführung des Luftverwirbelungselements 10 kann als Befestigungsmittel beispielsweise ein nicht-lösbares Befestigungsmittel, z.B. ein geeigneter Klebstoff, verwendet werden oder es könnte ein geeignetes lösbares Befestigungsmittel, wie z.B. eine Schraubverbindung usw. verwendet werden. Natürlich ist dies aber nur beispielhaft zu verstehen und die konkrete Position und konkrete konstruktive Ausgestaltung der Luftverwirbelungseinrichtung 9 kann im Wesentlichen beliebig gewählt werden, sofern die Luftverwirbelungseinrichtung 9 dazu geeignet ist, den erfindungsgemäßen Effekt des definierten Strömungsabrisses der das Seilbahnfahrzeug 2 umströmenden Luftströmung zu erzeugen. Je nach Art der Seilbahn 1 und der Seilbahnfahrzeuge 2 kann der Fachmann eine geeignete Position und konstruktive Ausführung der der Luftverwirbelungseinrichtung 9 auswählen.

Optional können z.B. auch zwei oder mehrere Luftverwirbelungselemente 10 vorgesehen sein, die in Bewegungsrichtung B und/oder in Querrichtung Q, quer zur Bewegungsrichtung, und/oder in vertikaler Richtung V voneinander beabstandet am Seilbahnfahrzeug 2, insbesondere am Beförderungskörper 8, angeordnet sind (siehe Fig.2a+2b). Ein Luftverwirbelungselement 10 kann beispielsweise in Bewegungsrichtung B zumindest teilweise luftdurchlässig ausgebildet sein und/oder zumindest ein Abschnitt des Luftverwirbelungselements 10 kann flexibel ausgebildet sein, beispielsweise aus einem elastischen Material. Das Luftverwirbelungselement 10 kann beispielsweise auch ein bürstenartiges Element, ein Netz, ein Lochblech oder ein Gitter oder eine Gummilippe aufweisen. Die Ausführungsform der Luftverwirbelungseinrichtung 9 als Luftverwirbelungselement 10 hat beispielsweise den Vorteil, dass bestehende Seilbahnen 1 in einfacher Weise mit einer erfindungsgemäßen Luftverwirbelungseinrichtung 9 nachgerüstet werden können, ohne dass wesentliche bauliche Veränderungen an den Seilbahnfahrzeugen 2 erforderlich sind.

Alternativ oder zusätzlich zu einem Luftverwirbelungselement 10 kann die Luftverwirbelungseinrichtung 9 beispielsweise auch mehrere hintereinander angeordnete (in Fig.1 nicht dargestellte) Vorsprünge 12 (Fig.3) und/oder mehrere hintereinander angeordnete Vertiefungen 13 (Fig.3) in Bewegungsrichtung B und/oder in Querrichtung Q und/oder in vertikaler Richtung V aufweisen. Die Vorsprünge 12 ragen von der Oberfläche ab, an der sie angeordnet sind und können beispielsweise eine Höhe von zumindest 5mm, vorzugsweise zumindest 10mm, besonders bevorzugt zumindest 30mm aufweisen. Die Vertiefungen 13 können beispielsweise eine Tiefe von zumindest 5mm, vorzugsweise zumindest 10mm, besonders bevorzugt zumindest 30mm aufweisen. Dadurch kann die Luftverwirbelungseinrichtung 9 beispielsweise als integraler Bestandteil des Beförderungskörpers 8 ausgebildet werden, z.B. in Form von Vertiefungen 12 in der Wetterschutzhaube eines Sessels S oder an der Außenfläche einer Kabine K, wie in Fig.3 angedeutet ist. Die Vertiefungen 12 können beispielsweise eine ähnliche Funktion wie die bekannten "Dimples" an einem Golfball erfüllen.

Um den Effekt der Luftverwirbelungseinrichtung 9 zu vergrößern ist es beispielsweise vorteilhaft, wenn die sich die Luftverwirbelungseinrichtung 9 über zumindest 30% einer Breite W (Fig.2a + Fig.3) des Seilbahnfahrzeugs 2, insbesondere des Beförderungskörpers 8, erstreckt, vorzugsweise zumindest 50%, besonders bevorzugt zumindest 70%. Weiters ist es vorteilhaft, wenn eine Breite X der Luftverwirbelungseinrichtung 9 in Querrichtung Q des Seilbahnfahrzeugs 2 (siehe Fig.2a+Fig.3) mindestens doppelt so groß ist, wie eine Länge Y der Luftverwirbelungseinrichtung 9 in Bewegungsrichtung B, vorzugsweise mindestens fünfmal, besonders bevorzugt mindestens zehnmal so groß. Dadurch wird eine schmale und breite Luftverwirbelungseinrichtung 9 mit einer relativ scharfen Abrisskante für die Luftströmung gebildet, was den Effekt verbessert.

Ein Teil der Luftverwirbelungseinrichtung 9 kann beispielsweise in einem oberen Bereich des Seilbahnfahrzeugs 2 oberhalb des Beförderungskörpers 8 angeordnet sein, vorzugsweise direkt am Beförderungskörper 8, so wie in Fig.1 dargestellt ist. Ein Teil der Luftverwirbelungseinrichtung 9 könnte aber beispielsweise auch in einem unteren Bereich des Seilbahnfahrzeugs 2 unterhalb des Beförderungskörpers 8 angeordnet sein, beispielsweise an der Unterseite eines Bodens der Kabine K (oder des Sessels S), wie in Fig.3 angedeutet ist. Gleichfalls könnte ein Teil der Luftverwirbelungseinrichtung 9 auch in einem seitlichen Bereich des Seilbahnfahrzeugs 2, z.B. seitlich am Beförderungskörper 8 angeordnet sein, um ein Querpendeln des Seilbahnfahrzeugs 2 zu verringern (siehe Fig.3). Beispielsweise kann sich der seitlich am Seilbahnfahrzeug 2 vorgesehene Teil der Luftverwirbelungseinrichtung 9 zumindest über einen Teil einer Höhe des Seilbahnfahrzeugs 2 erstrecken, vorzugsweise über zumindest 30%, besonders bevorzugt über zumindest 50% einer Höhe H des Beförderungskörpers 8 (z.B. Kabine K oder Sessel S mit Wetterschutzhaube). Eine Höhe Z des seitlich am Seilbahnfahrzeug 2 vorgesehenen Teils der Luftverwirbelungseinrichtung 9 in vertikaler Richtung V ist vorzugsweise mindestens doppelt so groß ist, wie seine Länge Y in Bewegungsrichtung B. Die Höhe Z in vertikaler Richtung V bezieht sich dabei auf den aktiven Zustand der Luftverwirbelungseinrichtung 9, beispielsweise auf das nachfolgend anhand Fig.2a+2b noch näher beschriebene Luftverwirbelungselement 10b in der Offenstellung der Wetterschutzhaube 14 gemäß Fig.2b oder die nachfolgend anhand Fig.3 noch näher beschriebenen Luftverwirbelungselemente 10c, 10d in Fig.3.

Nachfolgend werden anhand von Fig.2a+2b beispielhafte vorteilhafte Ausführungsformen der erfindungsgemäßen Luftverwirbelungseinrichtung 9 erläutert. Dabei zeigen Fig.2a+2b jeweils ein Seilbahnfahrzeug 2 mit einem Beförderungskörper 8 in Form eines Sessels S, an dem eine Wetterschutzhaube 14 zur Überdachung des Sessels S vorgesehen ist. Die Wetterschutzhaube 14 kann in bekannter Weise von den Passagieren manuell zwischen einer in Fig.2b dargestellten Offenstellung und einer in Fig.2a dargestellten Schließstellung verlagert werden. In der Schließstellung sind die Passagiere vor Witterung geschützt. Die Wetterschutzhaube 14 ist meist zumindest teilweise transparent und weist in der Regel eine gewölbte Außenfläche auf. Solche Wetterschutzhauben 14 sind grundsätzlich bekannt, weshalb an dieser Stelle darauf nicht im Detail eingegangen wird. Die Luftverwirbelungseinrichtung 9 weist im dargestellten Beispiel ein erstes Luftverwirbelungselement 10a und ein zweites Luftverwirbelungselement 10b auf, die an der Wetterschutzhaube 14 vorgesehen sind. Die beiden Luftverwirbelungselemente 10b sind hier als bürstenartige Elemente ausgebildet, die eine Vielzahl von vorzugsweise flexiblen Borsten aufweisen, die von der Wetterschutzhaube 14 emporragen. Das bürstenartige Element kann beispielsweise einen Grundkörper aus einem geeigneten Kunststoff aufweisen, an dem die Borsten angeordnet sind.

Je nach Größe des Seilbahnfahrzeugs 2 kann eine Höhe des Grundkörpers beispielsweise einige Millimeter bis einige Zentimeter betragen und eine Höhe der Borsten beträgt vorzugsweise mindestens 10mm, vorzugsweise mindestens 25mm, besonders bevorzugt mindestens 40mm. Eine Länge des Grundkörpers (in Bewegungsrichtung B) kann ebenfalls einige Millimeter bis einige Zentimeter betragen und ist vorzugsweise so dimensioniert, dass eine ausreichend stabile Befestigung am Seilbahnfahrzeug 2 ermöglicht wird. In erfolgreichen Versuchen wurde beispielsweise ein bürstenartiges Element mit einem Grundkörper mit einer Länge (in Bewegungsrichtung B) von 25mm, einer Höhe von 8mm und einer Borstenlänge von 50 verwendet. Das bürstenartige Element kann beispielsweise mit der den Borsten gegenüberliegenden Seite des Grundkörpers am Seilbahnfahrzeug festgeklebt werden.

Das erste Luftverwirbelungselement 10a ist vorzugsweise so an der Außenseite der Wetterschutzhaube 14 angeordnet, dass es in der Schließstellung der Wetterschutzhaube 14 in vertikaler Richtung V gesehen im Bereich des höchsten Punktes der Wetterschutzhaube 14 liegt. Wenn die Wetterschutzhaube 14, so wie in Fig.2a dargestellt, eine gewölbte Außenfläche aufweist, dann kann das erste Luftverwirbelungselement 10a beispielsweise im Bereich eines Scheitelpunktes der gewölbten Außenfläche vorgesehen sein. Dadurch kann die Luftströmung in der Schließstellung der Wetterschutzhaube 14 beeinflusst werden, um die Schwingungsanregung zu reduzieren. "Im Bereich" des höchsten Punktes bzw. des Scheitelpunktes bedeutet dabei, dass das erste Luftverwirbelungselement 10a bzw. allgemein die Luftverwirbelungseinrichtung 9 nicht zwingend genau im höchsten Punkt bzw. Scheitelpunkt angeordnet sein muss, sondern dass natürlich ein gewisser Spielraum für die Anordnung in Bewegungsrichtung B des Seilbahnfahrzeugs 2 gegeben ist. Die Luftverwirbelungseinrichtung 9 bzw. das erste Luftverwirbelungselement 10a könnte beispielsweise auch in Bewegungsrichtung B vor oder hinter dem höchsten Punkt bzw. dem Scheitelpunkt der gewölbten Außenfläche der Wetterschutzhaube 14 angeordnet sein. Gleichfalls könnte das erste Luftverwirbelungselement 10a bzw. allgemein die Luftverwirbelungseinrichtung 9 entgegen der Darstellung in Fig.2a auch in einem gewissen Winkel zur Querrichtung Q angeordnet sei. Auch die Anordnung entlang einer Geraden (hier in Querrichtung Q) ist natürlich nur beispielhaft zu verstehen. Das erste Luftverwirbelungselement 10a könnte beispielsweise auch mäanderförmig an der Wetterschutzhaube 14 angeordnet sein.

Wenn der erfindungsgemäße Effekt der Schwingungsreduktion in der Offenstellung der Wetterschutzhaube 14 eintreten soll, dann kann es vorteilhaft sein, wenn die Luftverwirbelungseinrichtung 9 beispielsweise so an der Wetterschutzhaube 14 angeordnet ist, dass sie in der Offenstellung der Wetterschutzhaube 14 in vertikaler Richtung gesehen im Bereich des höchsten Punktes der Wetterschutzhaube 14 liegt. Im dargestellten Beispiel weist die Luftverwirbelungseinrichtung 9 dazu das zweite Luftverwirbelungselement 10b auf, das im Bereich einer die Wetterschutzhaube 14 begrenzenden Vorderkante 15 der Wetterschutzhaube 14 angeordnet. Insbesondere verläuft das hier bürstenartige zweite Luftverwirbelungselement 10b im gezeigten Beispiel entlang der gesamten Vorderkante 15 der Wetterschutzhaube 14, sodass jeweils ein Teil des zweiten Luftverwirbelungselements 10b auch an den beiden Seiten des Beförderungskörpers 8 liegt, wie in Fig.2a und Fig.2b ersichtlich ist.

Die dargestellte Ausführungsform ist aber natürlich nur beispielhaft zu verstehen und die Luftverwirbelungseinrichtung 9 könnte konstruktiv auch anders ausgebildet sein. Beispielsweise könnte nur eines der Luftverwirbelungselemente 10a, 10b vorgesehen sein oder die Luftverwirbelungselemente 10a, 10b könnten konstruktiv anders ausgeführt sein. Alternativ oder zusätzlich zu den beiden Luftverwirbelungselementen 10a, 10b könnten die Luftverwirbelungseinrichtung 9 beispielsweise auch noch die genannten Vorsprünge 12 oder Vertiefungen 13 aufweisen. Wie sich in Versuchen überraschenderweise herausgestellt hat, kann auch eine an der Innenseite der Wetterschutzhaube 14 angeordnete Luftverwirbelungseinrichtung 9 zu einer Schwingungsreduktion im Betrieb der Seilbahn 1 führen. Beispielsweise könnte dazu in der Ausführungsform gemäß Fig.2a+2b alternativ oder zusätzlich zu den gezeigten Luftverwirbelungselemente 10a, 10b ein (nicht dargestelltes) bürstenartiges (oder anderweitig ausgebildetes) Luftverwirbelungselement an der konkaven Innenseite der gewölbten Wetterschutzhaube 14 angeordnet sein. Das Luftverwirbelungselement könnte in Bewegungsrichtung B gesehen beispielsweise in einem Bereich zwischen der, die Wetterschutzhaube 14 begrenzenden, Vorderkante 15 und dem Scheitelpunkt an der konkaven Innenseite der Wetterschutzhaube 14 angeordnet sein und sich in Querrichtung Q zumindest über einen Teil der Breite W des Seilbahnfahrzeugs 2 erstrecken. Dadurch kann in der Offenstellung der Wetterschutzhaube 14 auch eine definierte Abrisskante für die Luftströmung gebildet werden, die die Wetterschutzhaube 14 an deren Innenseite umströmt, wodurch eine kritische Schwingungsanregung verhindert werden kann.

In Fig.3 ist ein nicht erfindungsgemäßes Seilbahnfahrzeug 2 dargestellt, das als Beförderungskörper 8 eine Kabine K aufweist. Ein im Inneren der Kabine K vorgesehener Fahrgastraum ist über eine seitlich an der Kabine K vorgesehene Tür 11 zugänglich. Das dargestellte Seilbahnfahrzeug 2 ist beispielsweise zur Verwendung in einer Pendelbahn vorgesehen und weist ein Gehänge 7 mit einem Laufwerk 7b auf. Am Laufwerk 7b sind mehrere Rollen vorgesehen, die am Förderseil 3 abrollen. Der Antrieb erfolgt hier über ein zusätzliches Zugseil 3a. Natürlich ist das nur beispielhaft zu verstehen und das Seilbahnfahrzeug 2 könnte auch zur Verwendung in einer Umlaufbahn ausgebildet sein und eine Seilklemme 7a zur Befestigung an einem beweglichen Förderseil 3 aufweisen.

Ein Teil der Luftverwirbelungseinrichtung 9 kann hierbei z.B. am Dach 16 der Kabine K und/oder an einer Seitenwand 17 der Kabine und/oder am Boden 18 der Kabine K angeordnet sein. Lediglich beispielhaft sind in Fig.3 mehrere mögliche Ausführungsformen der Luftverwirbelungseinrichtung 9 dargestellt, die natürlich nicht zwingend gemeinsam verwendet werden müssen. In Bewegungsrichtung B gesehen im vorderen und hinteren Bereich des Seilbahnfahrzeugs 2 ist jeweils ein Luftverwirbelungselement 10a, 10b am Dach der Kabine angeordnet. Die Luftverwirbelungselemente 10a, 10b sind beispielhaft in Form von Lochblechen ausgebildet und somit in Bewegungsrichtung B teilweise luftdurchlässig. Die Form, Anzahl und der Abstand der Löcher des Lochblechs sind in geeigneter Weise festgelegt, sodass im Betrieb der Seilbahn 1 ein vorteilhafter Strömungsabriss der Luftströmung am Seilbahnfahrzeug 2 erreicht wird.

Weiters ist in Bewegungsrichtung B zwischen dem ersten Luftverwirbelungselement 10a und dem Gehänge 7 eine Mehrzahl von Vertiefungen 13 am Dach 16 der Kabine K vorgesehen, die einen Teil der Luftverwirbelungseinrichtung 9 ausbilden und die unabhängig von den Luftverwirbelungselementen 10a, 10b am Seilbahnfahrzeug 2 vorgesehen sein können. Wie in Fig.3 ersichtlich ist, kann eine Vielzahl von Vertiefungen 13 z.B. in Querrichtung Q gesehen und/oder in Bewegungsrichtung B gesehen hintereinander angeordnet sein, sodass ein Raster mit einer Länge Y und einer Breite X am Dach 16 der Kabine K gebildet wird. Dabei können die Vertiefungen 13 in Querrichtung Q und in Bewegungsrichtung B z.B. jeweils entlang einer Geraden hintereinander angeordnet sein, sodass sich ein regelmäßiges Raster ergibt. Aber auch eine unregelmäßige Anordnung wäre natürlich denkbar.

Alternativ oder zusätzlich zu den Vertiefungen 13 könnten auch Vorsprünge 12 vorgesehen sein, die z.B. ebenfalls rasterförmig angeordnet sein können, wie im Bereich zwischen dem zweiten Luftverwirbelungselement 10b und dem Gehänge 7 angedeutet ist. Die Vorsprünge 12 können vom Dach 16 der Kabine K emporragen, wobei zwischen den Vorsprüngen 12 ein Zwischenraum gebildet ist, sodass die Luftverwirbelungseinrichtung 9 in Bewegungsrichtung B gesehen teilweise luftdurchlässig ist. Die Form, Größe, Anzahl und der Abstand der Vertiefungen 13 bzw. der Vorsprünge 12 sind in geeigneter Weise festgelegt, sodass im Betrieb der Seilbahn 1 ein vorteilhafter Strömungsabriss der Luftströmung am Seilbahnfahrzeug 2 erreicht wird.

An der Seitenwand 17 der Kabine K ist hier ein weiteres drittes Luftverwirbelungselement 10c mit einer Höhe Z in vertikaler Richtung V und einer relativ dazu wesentlich geringeren Länge Y in Bewegungsrichtung B vorgesehen. Das dritte Luftverwirbelungselement 10c ist hier netzförmig ausgebildet und weist lediglich beispielhaft eine geringe Krümmung auf. Natürlich könnte in analoger Weise auch ein viertes Luftverwirbelungselement 10d auf der gegenüberliegenden Seitenwand vorgesehen sein, wie in Fig.3 angedeutet ist. Gleichfalls könnte auch Boden 18 unterhalb der Kabine K ein Teil der Luftverwirbelungseinrichtung 9 vorgesehen sein, wie in Fig.3 stellvertretend durch das fünfte und sechste Luftverwirbelungselement 10e, 10f angedeutet ist. Die Luftverwirbelungselemente 10e, 10f sind lediglich beispielhaft wiederum bürstenartig ausgebildet, ähnlich wie bereits anhand des Sessels S in Fig.2a+2b beschrieben wurde.

## Patentansprüche

1. Seilbahnfahrzeug (2) für eine Seilbahn (1), das mittels eines Förderseils (3) in einer durch das Förderseil (3) vorgegebenen Bewegungsrichtung (B) bewegbar ist, wobei das Seilbahnfahrzeug (2) ein Gehänge (7) zur hängenden Befestigung des Seilbahnfahrzeugs (2) am Förderseil (3) aufweist, wobei das Seilbahnfahrzeug (2) einen Beförderungskörper (8) zur Aufnahme von Personen aufweist, der mit dem Gehänge (7) verbunden ist, wobei der Beförderungskörper (8) einen Sessel (S) mit einer Wetterschutzhaube (14) zur Überdachung des Sessels (S) aufweist, wobei die Wetterschutzhaube (14) zwischen einer Offenstellung und einer Schließstellung verlagerbar ist, **dadurch gekennzeichnet, dass** an der Wetterschutzhaube (14) des Seilbahnfahrzeugs (2) eine Luftverwirbelungseinrichtung (9) vorgesehen ist, die dazu ausgebildet ist, während der Bewegung des Seilbahnfahrzeugs (2) einen definierten Strömungsabriss einer das Seilbahnfahrzeug (2) umströmenden Luftströmung zu erzeugen, wobei sich die Luftverwirbelungseinrichtung (9) quer zur Bewegungsrichtung (B) zumindest über einen Teil einer Breite (W) des Seilbahnfahrzeugs (2) erstreckt.

2. Seilbahnfahrzeug nach Anspruch 1, **dadurch gekennzeichnet, dass** sich die Luftverwirbelungseinrichtung (9) über zumindest 30% der Breite (W) des Seilbahnfahrzeugs (2) erstreckt, vorzugsweise zumindest 50%, besonders bevorzugt zumindest 70% und/oder dass eine Breite (X) der Luftverwirbelungseinrichtung (9) quer zur Bewegungsrichtung (B) des Seilbahnfahrzeugs (2) mindestens doppelt so groß ist, wie eine Länge (Y) der Luftverwirbelungseinrichtung (9) in Bewegungsrichtung (B), vorzugsweise mindestens fünfmal, besonders bevorzugt mindestens zehnmal so groß.

3. Seilbahnfahrzeug (2) nach einem der Ansprüche 1 bis 2, **dadurch gekennzeichnet, dass** ein Teil der Luftverwirbelungseinrichtung (9) in einem oberen Bereich des Seilbahnfahrzeugs (2) oberhalb des Beförderungskörpers (8) angeordnet ist und/oder dass ein Teil der Luftverwirbelungseinrichtung (9) in einem unteren Bereich des Seilbahnfahrzeugs (2) unterhalb des Beförderungskörpers (8) angeordnet ist und/oder dass ein Teil der Luftverwirbelungseinrichtung (9) in einem seitlichen Bereich des Seilbahnfahrzeugs (2) seitlich am Beförderungskörper (8) angeordnet ist.

4. Seilbahnfahrzeug (2) nach Anspruch 3, **dadurch gekennzeichnet, dass** sich der seitlich am Seilbahnfahrzeug (2) vorgesehene Teil der Luftverwirbelungseinrichtung (9) zumindest über einen Teil einer Höhe des Seilbahnfahrzeugs (2) erstreckt, vorzugsweise über zumindest 30% einer Höhe (H) des Beförderungskörpers (8), besonders bevorzugt über zumindest 50%.

5. Seilbahnfahrzeug (2) nach Anspruch 3 oder 4, **dadurch gekennzeichnet, dass** eine Höhe (Z) des seitlich am Seilbahnfahrzeug (2) vorgesehenen Teils der Luftverwirbelungseinrichtung (9) in vertikaler Richtung (V) mindestens doppelt so groß ist, wie seine Länge (Y) in Bewegungsrichtung (B), vorzugsweise mindestens fünfmal, besonders bevorzugt mindestens zehnmal so groß.

6. Seilbahnfahrzeug (2) nach einem der Ansprüche 1 bis 5, **dadurch gekennzeichnet, dass** die Luftverwirbelungseinrichtung (9) in Bewegungsrichtung (B) und/oder quer zur Bewegungsrichtung (B) und/oder in vertikaler Richtung (V) mehrere hintereinander angeordnete Vorsprünge (12) und/oder mehrere hintereinander angeordnete Vertiefungen (13) aufweist.

7. Seilbahnfahrzeug (2) nach Anspruch 6, **dadurch gekennzeichnet, dass** die Vorsprünge (12) eine Höhe von zumindest 5mm, vorzugsweise zumindest 10mm, besonders bevorzugt zumindest 30mm aufweisen und/oder dass die Vertiefungen (13) eine Tiefe von zumindest 5mm, vorzugsweise zumindest 10mm, besonders bevorzugt zumindest 30mm aufweisen.

8. Seilbahnfahrzeug (2) nach einem der Ansprüche 1 bis 7, **dadurch gekennzeichnet, dass** die Luftverwirbelungseinrichtung (9) zumindest ein Luftverwirbelungselement (10a-10f) aufweist, das mit einem Befestigungsmittel am Seilbahnfahrzeug (2), insbesondere am Beförderungskörper (8) befestigt ist.

9. Seilbahnfahrzeug (2) nach Anspruch 8, **dadurch gekennzeichnet, dass** die Luftverwirbelungseinrichtung (9) zumindest zwei Luftverwirbelungselemente (10a-10f) aufweist, die in Bewegungsrichtung (B) und/oder quer zur Bewegungsrichtung (B) und/oder in vertikaler Richtung (V) voneinander beabstandet am Seilbahnfahrzeug (2), insbesondere am Beförderungskörper (8), angeordnet sind.

10. Seilbahnfahrzeug (2) nach Anspruch 8 oder 9, **dadurch gekennzeichnet, dass** zumindest ein Luftverwirbelungselement (10a-10f) in Bewegungsrichtung (B) zumindest teilweise luftdurchlässig ist und/oder dass zumindest ein Abschnitt zumindest eines Luftverwirbelungselements (10a, 10b) flexibel ist.

11. Seilbahnfahrzeug (2) nach einem der Ansprüche 8 bis 10, **dadurch gekennzeichnet, dass** zumindest ein Luftverwirbelungselement (10a, 10b) ein bürstenartiges Element, ein Netz, ein Lochblech, ein Gitter oder eine Gummilippe aufweist.

12. Seilbahnfahrzeug (2) nach einem der Ansprüche 1 bis 11, **dadurch gekennzeichnet, dass** die Luftverwirbelungseinrichtung (9) in der Schließstellung der Wetterschutzhaube (14) an der Außenseite und/oder an der Innenseite der Wetterschutzhaube (14) angeordnet ist.

13. Seilbahnfahrzeug (2) nach einem der Ansprüche 1 bis 12, **dadurch gekennzeichnet, dass** die Luftverwirbelungseinrichtung (9) in der Schließstellung der Wetterschutzhaube (14) in vertikaler Richtung (V) gesehen im Bereich des höchsten Punktes an der Außenseite der Wetterschutzhaube (14) vorgesehen ist.

14. Seilbahnfahrzeug (2) nach einem der Ansprüche 1 bis 13, **dadurch gekennzeichnet, dass** die Wetterschutzhaube (14) eine gewölbte Außenfläche aufweist, wobei die Luftverwirbelungseinrichtung (9) vorzugsweise im Bereich eines Scheitelpunktes der gewölbten Außenfläche vorgesehen ist.

15. Seilbahnfahrzeug (2) nach einem der Ansprüche 1 bis 14, **dadurch gekennzeichnet, dass** die Luftverwirbelungseinrichtung (9) in der Offenstellung der Wetterschutzhaube (14) in vertikaler Richtung (V) gesehen im Bereich des höchsten Punktes der Wetterschutzhaube (14) vorgesehen ist, insbesondere im Bereich einer die Wetterschutzhaube begrenzenden Vorderkante (15) der Wetterschutzhaube (14).

16. Seilbahnfahrzeug (2) nach einem der Ansprüche 1 bis 15, **dadurch gekennzeichnet, dass** die Wetterschutzhaube (14) eine gewölbte Innenfläche aufweist und dass die Luftverwirbelungseinrichtung (9) in der Offenstellung der Wetterschutzhaube (14) in Bewegungsrichtung (B) zwischen einer, die Wetterschutzhaube (14) begrenzenden Vorderkante (15) und einem Scheitelpunkt der gewölbten Innenfläche an der Innenfläche der Wetterschutzhaube (14) angeordnet ist.

17. Seilbahn (1) mit einer Anzahl von Seilbahnfahrzeugen (2), die mittels eines Förderseils (3) zwischen zumindest zwei Seilbahnstationen (4) bewegbar sind, **dadurch gekennzeichnet, dass** zumindest ein Seilbahnfahrzeug (2) nach einem der Ansprüche 1 bis 16 ausgebildet ist.

## Claims

1. A cableway vehicle (2) for a cableway (1) which can be moved by means of a conveyor cable (3) in a direction of movement (B) specified by the conveyor cable (3), the cableway vehicle (2) having a suspension (7) for suspending the cableway vehicle (2) from the conveyor cable (3), wherein the cableway vehicle (2) has a carrier (8) for receiving persons which is connected to the suspension (7), wherein the carrier (8) has a chair (S) with a weather protection hood (14) for covering the chair (S), the weather protection hood (14) being displaceable between an open position and a closed position, **characterized in that** an air turbulence device (9) is provided on the weather protection hood (14) of the cableway vehicle (2), which air turbulence device is configured to generate a defined flow stall of an air flow flowing around the cableway vehicle (2) during the movement of the cableway vehicle (2), the air turbulence device (9) extending transversely with respect to the direction of movement (B) at least over some of a width (W) of the cableway vehicle (2).

2. The cableway vehicle according to claim 1, **characterized in that** the air turbulence device (9) extends over at least 30% of the width (W) of the cableway vehicle (2), preferably at least 50%, particularly preferably at least 70%, and/or a width (X) of the air turbulence device (9) transverse to the direction of movement (B) of the cableway vehicle (2) is at least twice, preferably at least five times, particularly preferably at least ten times, as large as a length (Y) of the air turbulence device (9) in the direction of movement (B).

3. The cableway vehicle (2) according to any one of claims 1 to 2, **characterized in that** a portion of the air turbulence device (9) is arranged above the carrier (8) in an upper region of the cableway vehicle (2), and/or **in that** a portion of the air turbulence device (9) is arranged below the carrier (8) in a lower region of the cableway vehicle (2), and/or **in that** a portion of the air turbulence device (9) is arranged laterally on the carrier (8) in a lateral region of the cableway vehicle (2).

4. The cableway vehicle (2) according to claim 3, **characterized in that** the portion of the air turbulence device (9) provided on the side of the cableway vehicle (2) extends at least over some of a height of the cableway vehicle (2), preferably over at least 30% of a height (H) of the transport body (8), particularly preferably over at least 50%.

5. The cableway vehicle (2) according to either claim 3 or claim 4, **characterized in that** a height (Z) of the portion of the air turbulence device (9) provided on the side of the cableway vehicle (2) in the vertical direction (V) is at least twice, preferably at least five times, particularly preferably at least ten times, as large as its length (Y) in the direction of movement (B).

6. The cableway vehicle (2) according to any one of claims 1 to 5, **characterized in that,** in the direction of movement (B) and/or transversely to the direction of movement (B) and/or in the vertical direction (V), the air turbulence device (9) has a plurality of projections (12) arranged one behind the other and/or a plurality of recesses (13) arranged one behind the other.

7. The cableway vehicle (2) according to claim 6, **characterized in that** the projections (12) have a height of at least 5 mm, preferably at least 10 mm, particularly preferably at least 30 mm, and/or **in that** the recesses (13) have a depth of at least 5 mm, preferably at least 10 mm, particularly preferably at least 30 mm.

8. The cableway vehicle (2) according to any one of claims 1 to 7, **characterized in that** the air turbulence device (9) has at least one air turbulence element (10a-10f) which is fastened to the cableway vehicle (2), in particular to the carrier (8), by a fastening means.

9. The cableway vehicle (2) according to claim 8, **characterized in that** the air turbulence device (9) has at least two air turbulence elements (10a-10f) which are spaced apart from one another on the cableway vehicle (2), in particular on the carrier (8), in the direction of movement (B) and/or transversely to the direction of movement (B) and/or in the vertical direction (V).

10. The cableway vehicle (2) according to either claim 8 or 9, **characterized in that** at least one air turbulence element (10a-10f) is at least partially air-permeable in the direction of movement (B) and/or **in that** at least a portion of at least one air turbulence element (10a, 10b) is flexible.

11. The cableway vehicle (2) according to any one of claims 8 to 10, **characterized in that** at least one air turbulence element (10a, 10b) has a brush-like element, a net, a perforated plate, a mesh or a rubber lip.

12. The cableway vehicle (2) according to any one of claims 1 to 11, **characterized in that** the air turbulence device (9) is arranged on the outside and/or on the inside of the weather protection hood (14) when the weather protection hood (14) is in the closed position.

13. The cableway vehicle (2) according to any one of claims 1 to 12, **characterized in that,** in the closed position of the weather protection hood (14), the air turbulence device (9) is provided on the outside of the weather protection hood (14) in the region of the highest point when viewed in the vertical direction (V).

14. The cableway vehicle (2) according to any one of claims 1 to 13, **characterized in that** the weather protection hood (14) has a curved outer surface, the air turbulence device (9) preferably being provided in the region of an apex of the curved outer surface.

15. The cableway vehicle (2) according to any one of claims 1 to 14, **characterized in that,** in the open position of the weather protection hood (14), the air turbulence device (9) is provided in the region of the highest point of the weather protection hood (14) when viewed in the vertical direction (V), in particular in the region of a front edge (15) of the weather protection hood (14) delimiting the weather protection hood.

16. The cableway vehicle (2) according to any one of claims 1 to 15, **characterized in that** the weather protection hood (14) has a curved inner surface and **in that**, in the open position of the weather protection hood (14), the air turbulence device (9) is arranged on the inner surface of the weather protection hood (14) in the direction of movement (B) between a front edge (15) delimiting the weather protection hood (14) and an apex of the curved inner surface.

17. A cableway (1) having a plurality of cableway vehicles (2) which can be moved between at least two cableway stations (4) by means of a conveyor cable (3), **characterized in that** at least one cableway vehicle (2) is designed according to any one of claims 1 to 16.

## Revendications

1. Véhicule de téléphérique (2) pour un téléphérique (1), lequel véhicule peut être déplacé au moyen d'un câble tracteur (3) dans une direction de déplacement (B) prédéfinie par le câble tracteur (3), dans lequel le véhicule de téléphérique (2) présente un moyen de suspension (7) pour la fixation en suspension du véhicule de téléphérique (2) au câble tracteur (3), dans lequel le véhicule de téléphérique (2) présente un corps de transport (8) permettant de recevoir des personnes, lequel est relié au moyen de suspension (7), dans lequel le corps de transport (8) présente un siège (S) comportant un capot de protection contre les intempéries (14) permettant de recouvrir le siège (S), dans lequel le capot de protection contre les intempéries (14) peut être déplacé entre une position ouverte et une position fermée, **caractérisé en ce qu'**un dispositif antiturbulence (9) est prévu sur le capot de protection contre les intempéries (14) du véhicule de téléphérique (2), lequel dispositif antiturbulence est conçu pour produire, pendant le déplacement du véhicule de téléphérique (2), un décrochage défini d'un courant d'air circulant autour du véhicule de téléphérique (2), dans lequel le dispositif antiturbulence (9) s'étend transversalement à la direction de déplacement (B) au moins sur une partie d'une largeur (W) du véhicule de téléphérique (2).

2. Véhicule de téléphérique selon la revendication 1, **caractérisé en ce que** le dispositif antiturbulence (9) s'étend sur au moins 30 % de la largeur (W) du véhicule de téléphérique (2), de préférence au moins 50 %, de manière particulièrement préférée au moins 70 %, **et/ou en ce qu'**une largeur (X) du dispositif antiturbulence (9) transversalement à la direction de déplacement (B) du véhicule de téléphérique (2) est au moins deux fois plus grande qu'une longueur (Y) du dispositif antiturbulence (9) dans la direction de déplacement (B), de préférence au moins cinq fois plus grande, de manière particulièrement préférée au moins dix fois plus grande.

3. Véhicule de téléphérique (2) selon l'une des revendications 1 à 2,
**caractérisé en ce qu'**une partie du dispositif antiturbulence (9) est disposée dans une zone supérieure du véhicule de téléphérique (2) au-dessus du corps de transport (8) **et/ou en ce qu'**une partie du dispositif antiturbulence (9) est disposée dans une zone inférieure du véhicule de téléphérique (2) en dessous du corps de transport (8) **et/ou en ce qu'**une partie du dispositif antiturbulence (9) est disposée dans une zone latérale du véhicule de téléphérique (2) latéralement sur le corps de transport (8).

4. Véhicule de téléphérique (2) selon la revendication 3,
**caractérisé en ce que** la partie du dispositif antiturbulence (9) prévue latéralement sur le véhicule de téléphérique (2) s'étend au moins sur une partie d'une hauteur du véhicule de téléphérique (2), de préférence sur au moins 30 % d'une hauteur (H) du corps de transport (8), de manière particulièrement préférée sur au moins 50 %.

5. Véhicule de téléphérique (2) selon la revendication 3 ou 4,
**caractérisé en ce qu'**une hauteur (Z) de la partie du dispositif antiturbulence (9) prévue latéralement sur le véhicule de téléphérique (2) est au moins deux fois plus grande dans la direction verticale (V) que sa longueur (Y) dans la direction de déplacement (B), de préférence au moins cinq fois plus grande, de manière particulièrement préférée au moins dix fois plus grande.

6. Véhicule de téléphérique (2) selon l'une des revendications 1 à 5,
**caractérisé en ce que** le dispositif antiturbulence (9) présente, dans la direction de déplacement (B) et/ou transversalement à la direction de déplacement (B) et/ou dans la direction verticale (V), plusieurs saillies (12) disposées les unes derrière les autres et/ou plusieurs renfoncements (13) disposés les uns derrière les autres.

7. Véhicule de téléphérique (2) selon la revendication 6,
**caractérisé en ce que** les saillies (12) présentent une hauteur d'au moins 5 mm, de préférence d'au moins 10 mm, de manière particulièrement préférée d'au moins 30 mm, **et/ou en ce que** les renfoncements (13) présentent une profondeur d'au moins 5 mm, de préférence d'au moins 10 mm, de manière particulièrement préférée d'au moins 30 mm.

8. Véhicule de téléphérique (2) selon l'une des revendications 1 à 7,
**caractérisé en ce que** le dispositif antiturbulence (9) présente au moins un élément antiturbulence (10a-10f) qui est fixé par un moyen de fixation au véhicule de téléphérique (2), en particulier au corps de transport (8).

9. Véhicule de téléphérique (2) selon la revendication 8,
**caractérisé en ce que** le dispositif antiturbulence (9) présente au moins deux éléments antiturbulences (10a-10f) qui sont disposés à distance l'un de l'autre sur le véhicule de téléphérique (2), en particulier sur le corps de transport (8), dans la direction de déplacement (B) et/ou transversalement à la direction de déplacement (B) et/ou dans la direction verticale (V).

10. Véhicule de téléphérique (2) selon la revendication 8 ou 9,
**caractérisé en ce qu'**au moins un élément antiturbulence (10a-10f) est au moins partiellement perméable à l'air dans la direction de déplacement (B) **et/ou en ce qu**'au moins une section d'au moins un élément antiturbulence (10a, 10b) est flexible.

11. Véhicule de téléphérique (2) selon l'une des revendications 8 à 10,
**caractérisé en ce qu'**au moins un élément antiturbulence (10a, 10b) comprend un élément de type brosse, un filet, une tôle perforée, une grille ou une lèvre en caoutchouc.

12. Véhicule de téléphérique (2) selon l'une des revendications 1 à 11,
**caractérisé en ce que** le dispositif antiturbulence (9) est disposé sur le côté extérieur et/ou sur le côté intérieur du capot de protection contre les intempéries (14) dans la position fermée du capot de protection contre les intempéries (14).

13. Véhicule de téléphérique (2) selon l'une des revendications 1 à 12,
**caractérisé en ce que** le dispositif antiturbulence (9) est prévu dans la position fermée du capot de protection contre les intempéries (14), vu dans la direction verticale (V), dans la zone du point le plus haut sur le côté extérieur du capot de protection contre les intempéries (14).

14. Véhicule de téléphérique (2) selon l'une des revendications 1 à 13, **caractérisé en ce que** le capot de protection contre les intempéries (14) présente une surface extérieure bombée, dans lequel le dispositif antiturbulence (9) est de préférence prévu dans la zone d'un sommet de la surface extérieure bombée.

15. Véhicule de téléphérique (2) selon l'une des revendications 1 à 14, **caractérisé en ce que** le dispositif antiturbulence (9) est prévu, dans la position ouverte du capot de protection contre les intempéries (14), vu dans la direction verticale (V), dans la zone du point le plus haut du capot de protection contre les intempéries (14), en particulier dans la zone d'un bord avant (15) du capot de protection contre les intempéries (14), lequel bord avant délimite le capot de protection contre les intempéries.

16. Véhicule de téléphérique (2) selon l'une des revendications 1 à 15, **caractérisé en ce que** le capot de protection contre les intempéries (14) présente une surface intérieure bombée **et en ce que** le dispositif antiturbulence (9) est disposé, dans la position ouverte du capot de protection contre les intempéries (14), dans la direction de déplacement (B) entre un bord avant (15) délimitant le capot de protection contre les intempéries (14) et un sommet de la surface intérieure bombée sur la surface intérieure du capot de protection contre les intempéries (14).

17. Téléphérique (1) comportant un certain nombre de véhicules de téléphérique (2) qui peuvent être déplacés entre au moins deux stations de téléphérique (4) au moyen d'un câble tracteur (3), **caractérisé en ce qu'**au moins un véhicule de téléphérique (2) est conçu selon l'une des revendications 1 à 16.
